# EUROPEAN PATENT APPLICATION

(11) **EP 2 259 565 A1**
(43) Date of publication of application: **08.12.2010**
(21) Application number: 09724884.3
(22) Date of filing: 26.03.2009
(51) Int. Cl.: H04M 3/42, H04M 1/725, H04W 8/18, H04W 76/02, H04W 88/06, H04W 88/18

(54) **MOBILE COMMUNICATION SYSTEM AND SUBSCRIBER PROFILE HOLDING DEVICE**

(30) Priority: 26.03.2008 JP 2008081240
(71) Applicant: NTT DOCOMO, INC., Tokyo 100-6150 (JP)
(72) Inventor: HONDA, Yasuyuki, Tokyo 100-6150 (JP); OGAWA, Taro, Tokyo 100-6150 (JP)
(74) Representative: Henseler, Daniela
(86) International application number: PCT/JP2009/056158
(87) International publication number: WO 2009/119755

(57) **Abstract**

A mobile communications system is provided such that a call connection control can be automatically performed in accordance with an identification code that is a destination of a connection request on an incoming call, when a terminal device receives the incoming call, and the state of the terminal device staying within a network, based upon a subscriber's will, and a subscriber profile holding device to be applied to the above system is also provided. There is provided a subscriber profile holding device 201 in a home network managed by a primary communications operator, so that subscriber information and connection admissibility condition data representing connection admissibility conditions in a case where a connection request to the terminal device is issued with a supplemental subscriber identification code as a connection destination. A call processor 310 (320) performs a call connection control based upon the connection admissibility condition data that have been held.

## Description

### Technical Field

The present invention relates to a mobile communications system, in which multiple subscriber identification codes are allowed to be assigned to a single terminal device as subscriber identification codes representing the single terminal device, multiple subscriber identification codes including a subscriber identification code (such as a telephone number) corresponding to a communications carrier in accordance with a primary contract and another subscriber identification code corresponding to another communications carrier, and also relates to a subscriber profile holding device to be applied to the mobile communications system.

### Background Art

There have been services in widespread use of assigning multiple telephone numbers to a single mobile information terminal device (such as a mobile telephone or the like) and allowing a subscriber to use the telephone numbers according to the purpose.
In the aforementioned services, it is common for a user to use the telephone numbers separately as needed, after a telephone number is assigned to a terminal device in accordance with a primary contract with a communications carrier and another telephone number is also assigned to the same terminal device in accordance with a supplemental contract together with the primary contract.

In recent years, however, another type of service has partially begun such that telephone numbers are assigned from multiple different communications carriers to a terminal device that functions over a single communications channel, at the same time.
In such a service, for example, a primary subscriber identification code (primary subscriber telephone number) can be assigned by a domestic primary communications carrier in accordance with the primary contract within the country, and a supplemental subscriber identification code (supplemental subscriber telephone number) can be assigned as a supplemental contract by a foreign communications carrier in addition to the primary contract. It is possible to use the telephone numbers separately depending on a case where a telephone call is received within the country or a case where a telephone call is received outside of the country in accordance with the above contract.

In the above case, for example, even when a mobile terminal roams out to a network operated by a local communications carrier, the user of the mobile terminal makes a contract that allows the use of a telephone number assigned by a certain local communications carrier in a corresponding country. Then, when a telephone call is received in the network operated by the certain local communications carrier so that the terminal device is connected, the charge for the call is lower in some cases than that of the case where the telephone number used within the country is still used in the corresponding country without change for receiving the telephone call.

In addition, there have been various types of proposals in relation to the services of making it possible to use multiple subscriber identification codes at a single terminal device.
For example, a technique has been proposed also in a system of assigning multiple telephone numbers for receiving incoming calls to a single mobile communications terminal, it is made possible for the user to use the multiple telephone numbers separately with more ease and appropriately. Additionally, in a case where the terminal device is located at a region corresponding to regional information representing that the terminal device does not receive an incoming call, any incoming calls to the terminal device are prevented depending on the regional information, even if another terminal makes a telephone call to the terminal device (See Patent document 1).

In addition, another technique has been proposed such that in offering the double service on the telephone number, necessary information is collected from a database for incoming-call regulation or connection of incoming-call forwarding (See Patent document 2).
Furthermore, yet another technique has been proposed for a system of forwarding an incoming call to a mobile terminal in a mobile communications system such that the incoming call is automatically forwarded according to the location of the mobile terminal without registering the change in the forwarding destination, forwarding condition, and the like in each time (See Patent document 3).

Moreover, a call-receiving side information display system has been proposed such that when a callee has moved to a foreign country and stayed therein, the corresponding information is obtainable before starting the telephone conversation with the callee (See Patent document 4).
According to the technique disclosed by Patent document 4, when a telephone call is originated to a communications terminal that has moved from a first country to a second country, additional information can be notified to a caller before the telephone call is connected by before call connection notification means. Thus, it is made possible to stop making a telephone call or to change to the transmission of e-mail because the charge for the call is higher than expected.
Patent Document 1: JP 2003-18657 A (Abstract, paragraph 0005, or the like)
Patent Document 2: JP H5-122349 A (Abstract or the like) Patent Document 3: JP H8-163640 A (Abstract or the like)
Patent Document 4: JP 2004-48460 A (Abstract paragraph 0007, or the like)

### Disclosure of the Invention

None of the above documents discloses a technical concept of making it possible to automatically perform a call connection control in response to a subscriber's (user's) intention in accordance with the identification code (an example is a telephone number) and the state of the terminal device staying within a network, to be used for a connection request of an incoming call to the terminal device. Also, none of the above documents discloses or suggests such a viewpoint to be a technical problem.
The present invention has been made in view of the above circumstances, and has an object of providing a mobile communications system that automatically performs a call connection control so as to satisfy a subscriber's intention, in accordance with an identification code that is a destination of a request of an incoming call and a state of the mobile terminal staying within a network, and providing a subscriber profile holding device to be applied to the system.

In order to address the above problem, the present invention proposes systems and devices to be described below.
(1) A mobile communications system in which a plurality of subscriber identification codes are assigned to a terminal device as subscriber identification codes representing the terminal device, the subscriber identification codes including a primary subscriber identification code assigned by a primary communications carrier in a primary contract and a supplemental subscriber identification code assigned by another communications carrier in a supplemental contract, the mobile communications system comprising: a subscriber profile holding device installed in a network operated by the primary communications carrier and for holding subscriber information and connection admissibility condition data representing a connection admissibility condition on whether or not a connection to a subscriber is admissible in case that a connection request to the terminal device is issued with respect to the supplemental subscriber identification code; and a call processor for performing a call connection control in response to an incoming call based upon the connection admissibility condition data held by the subscriber profile holding device.

In the mobile communications system of above (1), multiple subscriber identification codes can be assigned to a signal terminal device as subscriber identification codes representing the single terminal device, multiple subscriber identification codes including: a primary subscriber identification code assigned by a primary communications carrier in accordance with a primary contract; and a supplemental subscriber identification code assigned by another communications carrier in accordance with a supplemental contract.
The mobile communications system is configured to include a subscriber profile holding device and a call processor, so that the call processor performs a call connection control for the incoming call based upon the connection admissibility condition data held by the subscriber profile holding device.

The subscriber profile holding device is installed in a network operated by the primary communications carrier, and holds subscriber information and connection admissibility condition data representing a connection admissibility condition on whether or not a connection to a subscriber is admissible in response to the subscriber's intention, when a connection request to the terminal device is issued with the supplemental subscriber identification code as a connection destination.
The above connection admissibility condition data can be generated and acquired, for example, in response to a subscriber's intention, in accordance with the identification code of the terminal device to be used for the connection and the state of the terminal device staying within the network. Accordingly, the call processor automatically performs a call connection control on which the subscriber's intention is reflected, depending on the above connection admissibility condition data held by the subscriber profile holding device.

(2) A subscriber profile holding device holding prescribed data to be referred to for a call connection control by a call processor in a mobile communications system in which a plurality of subscriber identification codes are assigned to a terminal device as subscriber identification codes representing the terminal device, the subscriber identification codes including a primary subscriber identification code assigned by a primary communications carrier in a primary contract and a supplemental subscriber identification code assigned by another communications carrier in a supplemental contract, the subscriber profile holding device comprising: a subscriber information holding section installed in a network operated by the primary communications carrier for holding subscriber information to be referred to from the call processor; and a connection admissibility condition data holding section for holding connection admissibility condition data representing a connection admissibility condition on whether or not a connection to a subscriber is admissible in case that a connection request to the terminal device is issued with respect to the supplemental subscriber identification code.

The subscriber profile holding device of the above (2) is applicable to a mobile communications system in which multiple subscriber identification codes are allowed to be assigned to a single terminal device as subscriber identification codes representing the terminal device, the multiple subscriber identification codes including: a primary subscriber identification code that is assigned by a primary communications carrier in accordance with a primary contract; and a supplemental subscriber identification code that is assigned by another communications carrier in accordance with a supplemental contract.
The above subscriber profile holding device holds prescribed data to be referred to for a call connection control at a call processor that performs the call connection control in the mobile communications system.

That is, the subscriber profile holding device include: a subscriber information holding section that holds subscriber information; and a connection admissibility condition data holding section that holds connection admissibility data representing a connection admissibility condition on whether or not a connection to a subscriber is admissible based upon the subscriber's intention, when a connection request to the terminal device is issued with the supplemental subscriber identification code as a connection destination.
The above connection admissibility condition data can be generated and acquired, for example, in response to the subscriber's intention, in accordance with the identification code of the terminal device to be used for the connection and the state of the terminal device staying within the network.

The data held by the above subscriber information holding section and the connection admissibility data holding section are referred to when the call processor performs the call connection control.
In the mobile communications system in which the above subscriber profile holding device is installed, the call processor is capable of automatically performing the regulation of an incoming call on which the subscriber's intention is reflected, depending on the above connection admissibility condition data held by the subscriber profile holding device.

(3) The subscriber profile holding device may further comprise a connection admissibility determination section for determining whether or not the connection is admissible based upon data representing the connection admissibility condition held by the connection admissibility condition data holding section and data representing a connection state on the connection request externally supplied.
In the subscriber profile holding device of the above (3), the connection admissibility determination section determines whether or not the connection should be admissible based upon data representing the connection admissibility condition held by the connection admissibility condition data holding section and data representing a connection state on the connection request externally supplied. It is therefore possible to automatically perform incoming-call regulation on which the subscriber's intention is reflected in an appropriate manner.

(4) In the subscriber profile holding device, the connection admissibility condition data holding section holds data generated in response to a selective setting by a subscriber arbitrarily as data representing the connection admissibility condition.
In the subscriber profile holding device of the above (4), for example, data representing the connection admissibility condition is generated according to the selective configuration of the subscriber' s intention, by use of an interactive user interface or the like with a guide message, for example. It is therefore possible to automatically perform incoming-call regulation on which the subscriber' s intention is reflected in an appropriate manner.
According to an aspect of the present invention, a mobile communications system is achieved such that a call connection control is automatically performed in response to a subscriber's intention, in accordance with an identification code that is a destination of a connection request and the state of a terminal device staying within a network. In addition, a subscriber profile holding device to be applied to this system is also achieved.

### Brief Description of the Drawings

FIG. 1 is a conceptual diagram indicative of a configuration of a mobile communications system according to an embodiment of the present invention;
FIG. 2 is a conceptual diagram indicative of a configuration of a subscriber profile holding device in the mobile communications system of FIG. 1;
FIG. 3 is a diagram for describing the outline of the communications in the communications system including the mobile communications system according to an aspect of the present invention;
FIG. 4 is a sequence chart indicative of a call connection control operation according to an embodiment of the present invention;
FIG. 5 is a sequence chart indicative of another call connection control operation according to an embodiment of the present invention;
FIG. 6 is a sequence chart indicative of yet another call connection control operation according to an embodiment of the present invention; and
FIG. 7 is a sequence chart indicative of further another call connection control operation according to an embodiment of the present invention.

### Explanation of References

- 10: mobile communications system
- 11, 12, 13, 14: network
- 100: network
- 101, 102: terminal device
- 121, 122, 123, 124: mobile communications equipment
- 200, 201: subscriber profile holding device
- 210: subscriber information holding section
- 211: subscriber identification code holding device
- 220: in-service communications carrier determination section
- 230: notification opportunity determination section
- 240: identification code notification state updating section
- 250: identification code notification instruction section
- 260: subscriber information response section
- 270: connection admissibility determination section
- 271: connection admissibility condition data holding section
- 280: connection admission/denial instruction section
- 310, 320: call processor

### Best Mode for Carrying Out the Invention

Embodiments of the present invention will now be described in detail with reference to the drawings. In each of the drawings to be referred to, for sake of convenience, main components to be the subjects of the description will be magnified as necessary, whereas parts other than the main components will be simplified or omitted as necessary.

### (Outline of Mobile Communication System According to the Present Invention)

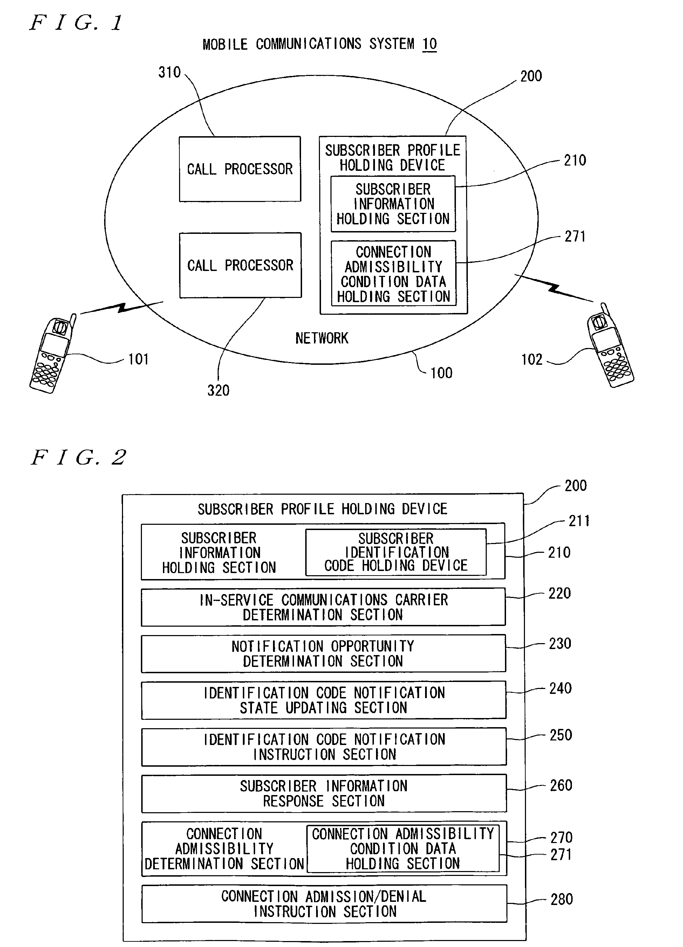

FIG. 1 is a conceptual diagram indicative of a configuration of a mobile communications system according to an embodiment of the present invention.
In FIG. 1, a mobile communications system 10 according to an embodiment of the present invention is configured to be a network including: a subscriber profile holding device 200; and call processors 310 and 320.
Incidentally, a network under the control of a primary communications carrier in relation to a primary contract with a single terminal device will be referred to as home network as necessary.

The mobile communications system 10 controls setup and release of a call between multiple terminal devices (for example, mobile telephones) 101 and 102, which are existing in the network or located outside of the network, and also have characteristic functions to be described below.
In the mobile communications system 10, in particular, multiple subscriber identification codes are allowed to be assigned to a single terminal device (for example, a mobile telephone) 101 or 102 as subscribed identification codes in order to represent the terminal device (for example, a mobile telephone) 101 or 102. The multiple subscriber identification codes include: a primary subscriber identification code to be assigned by a primary communications carrier in accordance with the primary contract (that is a communications carrier who manages the above home network); and a supplemental subscriber identification code to be assigned by a supplemental communications carrier in accordance with a supplemental contract.

The subscriber identification code is herein assigned as, for example, a telephone number or an e-mail address.
In the mobile communications system 10 according to the present embodiment, a subscriber information holding section 210 and a connection admissibility condition data holding section 271 are implemented in the subscriber profile holding device 200 constituting a communications equipment substantially corresponding to HLR (Home Location Register) of the existing system. Meanwhile, the call processor 310 is installed to serve as a gateway switch, for example, to connect networks operated by other communications carriers and each node of the home network, whereas multiple base transceiver stations or base station controllers are connected to lower nodes of the call processor 320 to cover mobile communication in the home network.

### (Subscriber Profile Holding Device According to an Embodiment of the Present Invention)

FIG. 2 is a conceptual diagram indicative of a configuration of the subscriber profile holding device 200 according to an embodiment of the present invention.
The subscriber profile holding device 200 is provided with: the subscriber information holding section 210; an in-service communications carrier determination section 220; a notification opportunity determination section 230; an identification code notification state updating section 240; an identification code notification instruction section 250; a subscriber information response section 260; a connection admissibility determination section 270; and a connection admission/denial instruction section 280.
A subscriber identification code holding device 211 that holds subscriber identification codes that are assigned to subscribers is implemented in the subscriber information holding section 210.

The subscriber profile holding section 210 holds the subscriber identification codes (such as telephone numbers or e-mail addresses) as described above held by the subscriber identification code holding device 211 so as to permit multiple subscriber identification codes to be assigned to a single terminal device of a single subscriber, and in addition, holds prescribed subscriber information on the service contracts.
The in-service communications carrier determination section 220 determines a communications carrier that manages the equipments (examples are base transceiver stations and upper nodes thereof) for covering the regions where terminal devices stay.

The notification opportunity determination section 230, when a predefined prescribed condition is satisfied, recognizes that the opportunity has arrived to notify the identification code of the terminal device to the corresponding terminal device that has made a contract of using multiple identification codes.
The identification code notification state updating section 240 suppresses the recognition of the arrival of a opportunity of notification until the corresponding terminal device is detected to have returned to the network operated by the communications carrier of the primary contract so that the identification code is repeatedly notified, while monitoring the notification state of notifying the identification codes to the terminal devices over time and maintaining an appropriate interval of time, since the identification code is once notified. For example, the identification code notification state updating section 240 updates the history of the notification completion when the terminal device is detected to have returned to stay within the network.

The identification code notification instruction section 250 gives an instruction to notify the identification codes when it is determined that the condition for notifying the identification code to the corresponding terminal device is satisfied.
The subscriber information response section 260 supplies the subscriber information in response to the reference of the subscriber information from the outside.
The connection admissibility determination section 270 determines whether or not the connection of the corresponding incoming call is admissible in light of the service contract. Such a determination is made in light of the connection admissibility conditions set, registered, and held by the connection admissibility condition data holding section 271 provided in the connection admissibility determination section 270.

The connection admission/denial instruction section 280 gives an instruction of whether or not the connection is admissible based upon the determination result of whether or not the connection of the incoming call is admissible by the connection admissibility determination section 270.

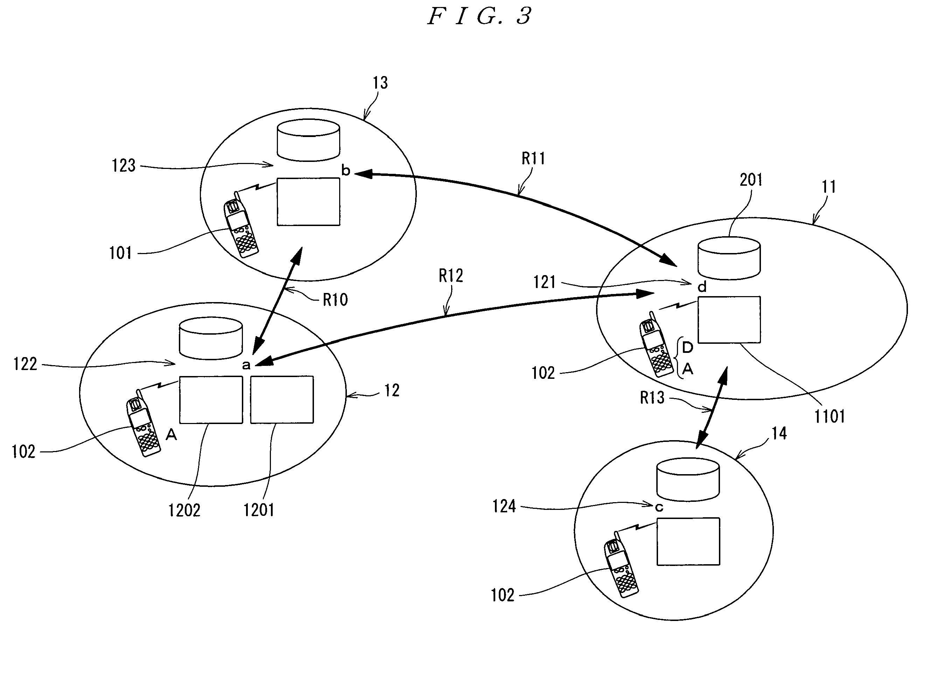

FIG. 3 is a diagram for describing the outline of the communications in the communications system including the mobile communications system according to an aspect of the present invention.
In the drawing, a circle located in the upper right conceptually represents the network system (network) of a communications carrier "d" in accordance with the primary contract with a subscriber (and a subscriber's terminal device). In the following description, a network 11 of the communications carrier in accordance with the primary contract will be referred to as "home network", as necessary.

An identification code "D" as a primary contract number (that is a primary subscriber identification code) assigned by the communications carrier "d" of the home network 11 is assigned to the terminal device 102, and in addition, an identification code "A" as a supplemental contract number (that is a supplemental subscriber identification code) assigned by another (for example, foreign) communications carrier "a" is assigned to the terminal device 102.
A network 12 of a local communications carrier operated by another communications carrier "a" (which will be referred to as "local communications carrier" in the following description) that assigns the identification code "A" is conceptually indicated by a circle in the lower left in the drawing.

Also, in the drawing, a circle in the upper left is a network 13, of yet another communications carrier "b", within which the terminal device 101 that originates a telephone call stays. In the following description, it is assumed that the terminal device 101 originates a telephone call from the network 13. Therefore, the network 13 will be referred to as "source network", as necessary.
Incidentally, in the drawing, a circle in the lower right is a network 14, of further another communications carrier "c", to which the above terminal device 102 moves and stays therein.
The home network 11 is provided with: a call processor 1101 that takes form of, for example, a mobile switching center; a subscriber profile holding device 201 that takes form of, for example, an HLR; and a mobile communications equipment 121 including a radio-based communications equipment, not illustrated. The mobile communications equipment 121 performs the mobile communications services. Each network has the same network equipments as an ordinary network, so typical indication is merely illustrated in the drawing.

Moreover, the subscriber profile holding device 201 in FIG. 3 corresponds to the subscriber profile holding device 200 in FIG. 1 and FIG. 2.
Likewise, a mobile communications equipment 122 is installed in the network 12 of the local communications carrier, and includes a call processor 1201 and a call processor 1202. These call processors 1201 and 1202 correspond to the call processor 310 and the call processor 320, respectively, that have been described with reference to FIG. 1.

The source network 13 is provided with a mobile communications equipment 123, whereas the network 14 is provided with a mobile communications equipment 124 so as to cover the mobile communications services.
Now, it is assumed a case where in response to an outgoing call from the terminal device 101 that stays within the source network 13, the terminal device 102 receives an incoming call while the terminal device 102 is staying within the network 12.
With such a situation, in a case where the identification code "D" to be assigned by the communications carrier "d" is used for receiving the incoming call and the terminal device 102 stays outside of the home network 11, the incoming call goes through a connection route R11 from the source network 13 to the home network 11 despite whether or not the terminal device 102 stays within the network in accordance with the existing rules of this type of mobile communications system.

That is, even if the terminal device 102 stays within the network 12 of the communications carrier "a", the call goes through a connection route R11 and a connection route R12 instead of the connection route R10, when the terminal device 102 receives the incoming call with the identification code "D" instead of the identification code "A".
Meanwhile, the terminal device 102, when receiving the incoming call with the identification code "A" that has been assigned by the communications carrier "a" that manages the network 12 of the local communications carrier, the call goes through the connection route R10 from the source network 13 to the network 12 without going through the home network 11. The charge for the call is relatively low. In other words, it is made possible for the terminal device 102 to receive the incoming call with the identification code "A" at a lower cost than to receive the incoming call with the identification code "D".

However, in a case where the terminal device 102 does not stay within the network 12 of the local communications carrier that assigns the identification code "A" but stays within, for example, the network 11 of the communications carrier "d" or the network 14 of the communications carrier "c", although the identification code "A" is used for receiving the incoming call originated from the terminal device 101 that stays within the source network 13, the connection route through the network 12 of the communications carrier "a" is inevitably taken, so the charge for the call is relatively high.

As described heretofore, the route of the incoming call goes through the connection route R11 and the connection route R12 depending on the case on purpose, instead of the shortest route. In the existing mobile communications system, however, the charge for the call going through the connection route R11 is charged to the terminal device 101 that originates the call, whereas the charge for the call going through the connection route R12 is charged to the terminal device 102 that receives the call.
In such a case, the subscriber of the terminal device 102 is subject to an undesired charge unintentionally. Not a few subscribers do not like to answer such incoming calls.

According to an embodiment of the present invention, it is configured such that whether or not an incoming call is connected is automatically selectable by means of a call connection control on which the subscriber's intentions of whether or not the incoming call should be connected are reflected according to the state of whether or not the terminal device stays within a network and according to the communications carrier that assigns the identification code to be applied to the incoming call.
To be brief, a subscriber presets conditions that admit connection of an incoming call and registers the conditions in the home network 11 (the subscriber profile holding device 201 thereof), and the call connection control is performed so that only the incoming call that satisfies the conditions is connected.

The above call connection control is made by cooperation f the existing subscriber profile holding device 200 and a call processor 400.
That is, the call connection control is made such that the state of the connection in response to a connection request is checked with the incoming call admissibility condition held by the connection admissibility condition data holding section 271 of the connection admissibility determination section 270 in the existing subscriber profile holding device 201.
Incidentally, the instruction regarding whether or not the connection is admissible is given to the outside from the existing connection admission/denial instruction section 280. This characteristic is same as each example to be described below. Therefore, the detailed description thereof for each example will be omitted.
This makes it possible for the subscriber of the terminal device 102 on the receiving side to avoid the event in which an undesired charge for the call is made unintentionally.

### (Call Connection Control Operation According to an Embodiment of the Present Invention)

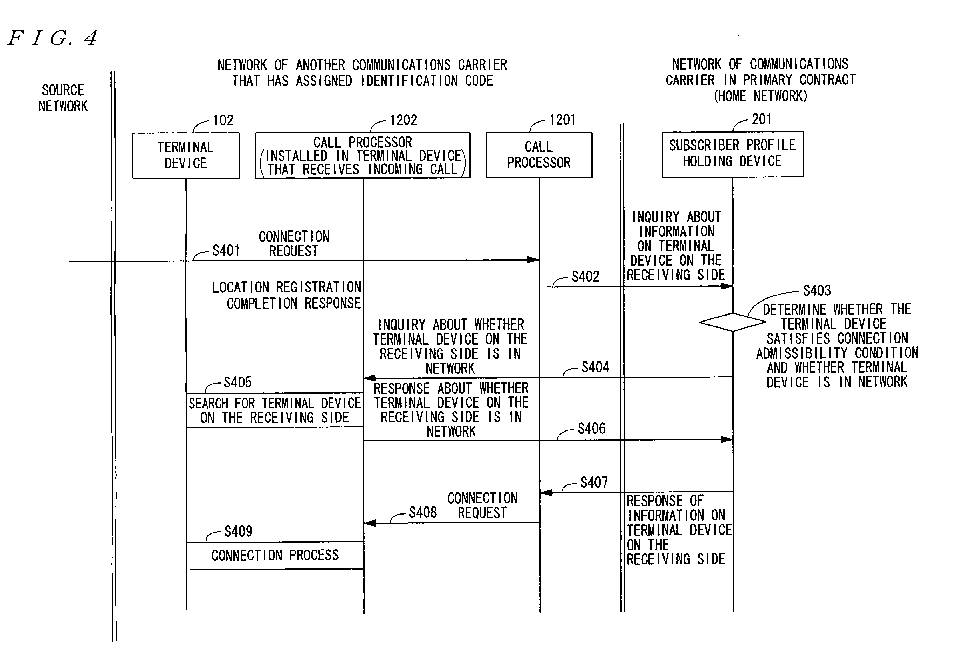

FIG. 4 to FIG. 7 are sequence charts indicative of a call processing operation according to embodiments of the present invention.
The operations indicated in each of the drawings are performed at corresponding functional parts in the system of FIG. 3 under the condition assumed for each of the embodiments in each of the drawings.
FIG. 4 is a sequence chart indicative of the operation of the case where the identification code "A" to be used for receiving an incoming call by the terminal device 102 is assigned by the communications carrier "a", and the incoming call is connected in the network of the communications carrier "a".
The call processor 1201 installed in the network 12 of the communications carrier "a" receives a connection request issued from the source network (step S401).

The call processor 1201 that received the connection request at step S401 makes an inquiry to the subscriber profile holding device 201 installed in the home network 11 of the subscriber that is a destination of the connection request about subscriber information on the terminal device 102 that is the connection destination of the connection request at step S401 (step S402).
The subscriber profile holding device 201 that received the inquiry at step S402 searches for the subscriber information on the terminal device 102 based upon the subscriber profile data held in the subscriber profile holding device 201, prepares for providing the information, and determines the communications carrier whose network within which the terminal device 102 (the connection destination of the incoming call) stays at this current point of time (step S403).

In the present embodiment, in particular, in addition to the search for the above subscriber information, connection admissibility determination information based upon the connection admissibility condition data on whether or not the connection to the subscriber is admissible is searched for.
Also in a case where the terminal device 102 receives the incoming call outside of the network 12 operated by the communications carrier "a" that has assigned the identification code (telephone number) "A" to be used for receiving the incoming call at step S403, the connection admissibility determination information on whether or not the incoming call should be connected to the terminal device 102 is acquired and the provision of the connection admissibility determination information is prepared.

In FIG. 4, it is assumed that the connection admissibility conditions are defined in effect of connecting the incoming call to the terminal device with the use of the connection admissibility determination information, also in a case where the terminal device 102 receives the incoming call outside of the network 12 operated by the communications carrier "a" that has assigned the identification code (telephone number) "A" to be used for receiving the incoming call.
As previously described above with reference to FIG. 3, if the communications carrier whose network within which the terminal device 102 stays has assigned the identification code that can be used by the terminal device 102, the number of connections to the terminal device 102 is reduced and the charge for the calls is relatively low.

Subsequent to step S403, the subscriber profile holding device 201 makes an inquiry to the call processor 1202 about whether or not the terminal device 102 is actually staying within the network 12 as determined by the data even at this current point of time, although the network 12 has the call processor 1201 to which the inquiry was made at step S402 and the terminal device 102 that is a connection destination stays within the network 12. When it is confirmed that the terminal device 102 is actually staying within the network 12, an address necessary for connection is assigned (step S404).

The process of step S404 is defined as standard in the existing system, and the information on the source side is also notified. The search for the terminal device 102 on the receiving side in response to the confirmation at step S404 is performed between the call processor 1202 and the terminal device 102 (step S405). When it is confirmed that the terminal device 102 stays within the network, this fact is responded to the subscriber profile holding device 201 of the above home network 11 (step S406).

The subscriber profile holding device 201 that received the response at step S406 makes a response of the subscriber information on the callee corresponding to the inquiry at the above step S402, to the call processor 1201 of the network 12. On this occasion, the connection admissibility determination information (that is an instruction of connection or instruction of disconnection) representing the connection admissibility determination result made by the connection admissibility determination section 270 of the subscriber profile holding device 201 (FIG. 2: 200) is transmitted (at step S407).

The call processor 1201 issues a connection request to the call processor 1202 based upon the data of the subscriber information and the connection admissibility determination information acquired at step S407, when it is determined that the connection of an incoming call is determined to be admissible (step S408).
The connection process is performed between the call processor 1202 and the terminal device 102 based upon the connection request at step S408 (step S409).

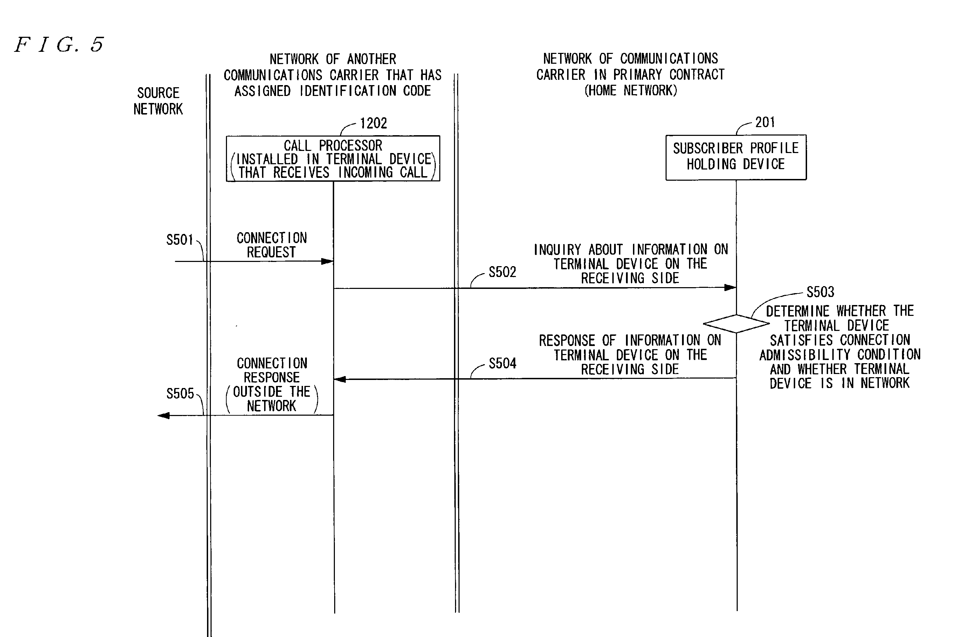

FIG. 5 is a sequence chart indicative of the operation of the case where the terminal device receives an incoming call with the use of the identification code "A" that has been assigned by the communications carrier "a", and the terminal device that receives the incoming call stays outside of the network of the communications carrier "a".
The call processor 1202 installed in the network 12 of the communications carrier "a" receives a connection request issued from the source network (step S501).
The call processor 1202 that received the connection request at step S501 makes an inquiry to the subscriber profile holding device 201 installed in the home network 11 of the subscriber that is a connection destination about subscriber information on the terminal device 102 that is the connection destination of the connection request at step S501 (step S502).

The subscriber profile holding device 201 that received the inquiry at step S502 searches for the subscriber information on the terminal device 102 based upon the subscriber profile data held in the subscriber profile holding device 201, prepares for providing the information, and determines the communications carrier whose network within which the terminal device 102 (the connection destination of the incoming call) stays at this current point of time (step S503).
In addition, at step S503, the provision of the connection admissibility determination information is prepared, in the same manner as the above step S403 with reference to FIG. 4.

In FIG. 5, however, it is assumed that the incoming call is not connected to the terminal device 102 and the disconnection process is performed in the case where the incoming call is received outside of the network 12 operated by the communications carrier "a" that has assigned the identification code (telephone number) "A" to be used for receiving the incoming call.
Subsequent to step S503, the subscriber profile holding device 201 makes a response of the subscriber information on the callee corresponding to the inquiry made at the above step S502, to the call processor 1202 of the network 12. On this occasion, the subscriber profile holding device 201 also gives an instruction of the above connection admissibility determination information (step S504).

In the present embodiment, the incoming call is not connected to the terminal device 102 and the disconnection process is performed by use of the data of the connection admissibility determination information, as described above. Therefore, the response at step S504 is a response of a disconnection instruction. Upon receipt of this instruction, the call processor 1201 of the network 12 gives a connection response of "outside the network" that represents the disconnection to the source of the connection request (step S505).

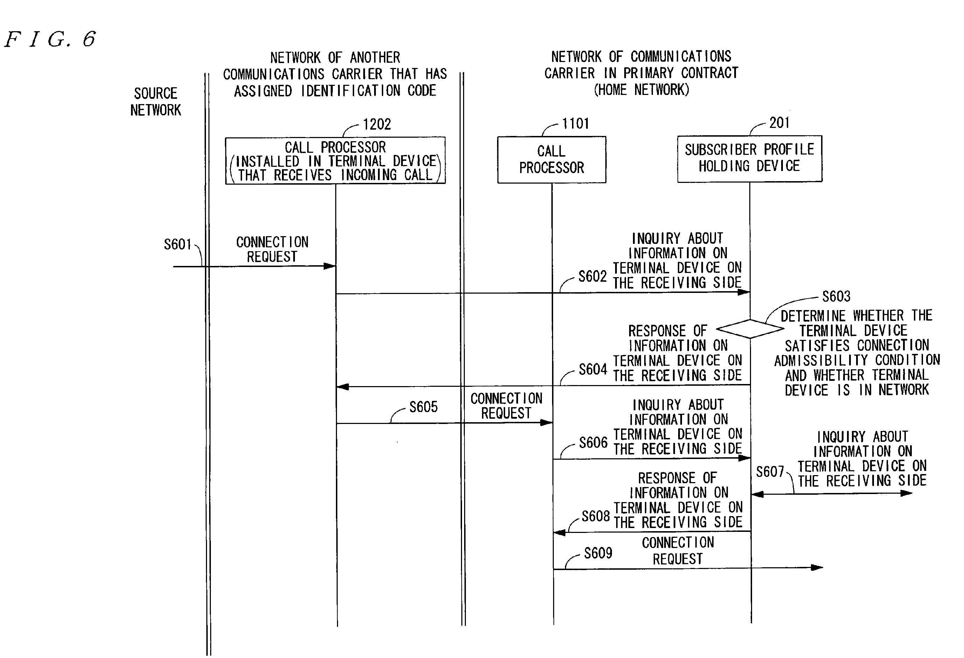

FIG. 6 is a sequence chart indicative of the operation of the case where the terminal device receives an incoming call with the use of the identification code "A" that has been assigned by the communications carrier "a", and the terminal device receives the incoming call with the use of the identification code "A" even when the terminal device stays outside of the network of the communications carrier "a".
The call processor 1202 installed in the network 12 of the communications carrier "a" receives a connection request issued from the source network (step S601).
The call processor 1202 that received the connection request at step S601 makes an inquiry to the subscriber profile holding device 201 installed in the home network 11 of the subscriber that is a connection destination about subscriber information on the terminal device 102 that is the connection destination of the connection request at step S601 (step S602).

The subscriber profile holding device 201 that received the inquiry at step S602 searches for the subscriber information on the terminal device 102 based upon the subscriber profile data held in the subscriber profile holding device 201, prepares for providing the information, and determines the communications carrier whose network within which the terminal device (the connection destination of the incoming call) 102 stays at this current point of time (step S603). In addition, at step S603, the provision of the connection admissibility determination information is prepared, in the same manner as the above step S403 of FIG. 4.

In the embodiment of FIG. 6, however, it is assumed that the call to the terminal device 102 is connected, in the case where the incoming call is received outside of the network 12 operated by the communications carrier "a" that has assigned the identification code (telephone number) "A" to be used for receiving the incoming call, including cases where the incoming call is received in the home network 11 operated by the communications carrier "d" and the incoming call is received in the network 14 operated by the communications carrier "c".
Subsequent to step S603, the subscriber profile holding device 201 makes a response of the subscriber information on the callee corresponding to the inquiry made at the above step S602, to the call processor 1202 of the network 12. On this occasion, the connection admissibility determination information representing the connection admissibility determination result (that is an instruction of connection or instruction of disconnection) made by the connection admissibility determination section 270 of the subscriber profile holding device 201 (FIG. 2: 200) is transmitted (step S604).

The call processor 1202 of the network 12 issues a connection request to the call processor 1101 of the home network 11 based upon the data acquired at step S604 (step S605).
Upon receipt of the connection request at step S605, the call processor 1101 of the home network 11 makes an inquiry to the subscriber profile holding device 201 of the home network 11 about the callee information (step S606).
At a point of time after receiving the inquiry about the callee information at step S606, the subscriber profile holding device 201 searches for a terminal device that stays within the network and that satisfies the condition (step S607). When such a satisfied terminal device is found, the subscriber information on the corresponding terminal device is supplied to the call processor 1101 of the home network 11 (step S608).
The call processor 1101 that was supplied with the subscriber information at step S608 issues a connection request to the corresponding terminal device (step S609).

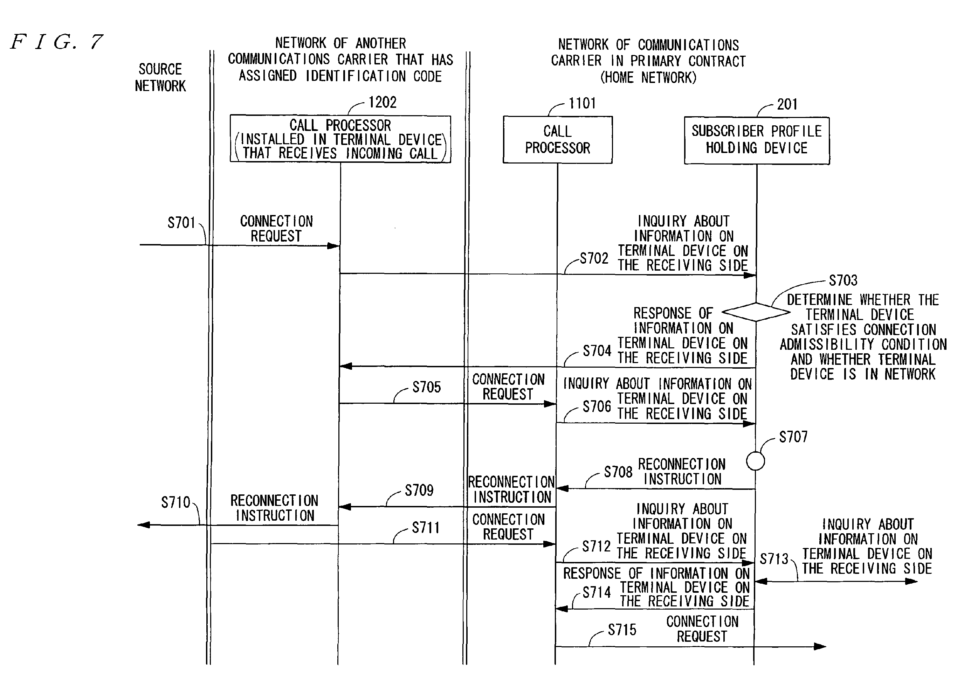

FIG. 7 is a sequence chart indicative of the operation of the case where the terminal device receives an incoming call with the use of the identification code "A" that has been assigned by the communications carrier "a" in the same manner as FIG. 6, but the terminal device receives the incoming call with the use of the identification code "A" under the condition set in a different manner from that of FIG. 6, even when the terminal device that will receive the incoming call stays outside of the network of the communications carrier "a".
The call processor 1202 installed in the network 12 of the communications carrier "a" receives a connection request issued from the source network (step S701).

The call processor 1201 that received the connection request at step S701 makes an inquiry to the subscriber profile holding device 201 installed in the home network 11 of the subscriber that is a connection destination in the connection request about subscriber information on the terminal device 102 that is the connection destination of the connection request at step S701 (step S702).
The subscriber profile holding device 201 that received the inquiry at step S702 searches for the subscriber information on the terminal device 102 based upon the subscriber profile data held in the subscriber profile holding device 201, prepares for providing the information, and determines the communications carrier whose network within which the terminal device 102 (the connection destination of the incoming call) stays at this current point of time (step S703).

In addition, at step S703, the provision of the connection admissibility determination information is prepared in the same manner as step S403 of FIG. 4. In the example of FIG. 7, however, in the case where the terminal device 102 receives the incoming call outside of the network 12 operated by the communications carrier "a" that has assigned the identification code (telephone number) "A" to be used for receiving the incoming call with the use of the connection admissibility determination information, it is assumed that the condition is set such that the incoming call is connected to the terminal device 102, including cases where the incoming call is received in the home network 11 operated by the communications carrier "d" and the incoming call is received in the network 14 operated by the communications carrier "c".

Subsequent to step S703, the subscriber profile holding device 201 makes a response of the subscriber information on the callee corresponding to the inquiry made at the above step S702, to the call processor 1202 of the network 12. On this occasion, the connection admissibility determination information representing the connection admissibility determination result (that is an instruction of connection or instruction of disconnection) made by the connection admissibility determination section 270 of the subscriber profile holding device 201 (FIG. 2: 200) is transmitted (step S704)

The call processor 1202 of the network 12 issues a connection request to the call processor 1101 of the home network 11 based upon the data acquired at step S704 (step S705).
Upon receipt of the connection request at step S705, the call processor 1101 of the home network 11 makes an inquiry to the subscriber profile holding device 201 of the home network 11 about the callee information (step S706).

At a point of time after receiving the inquiry about the callee information at step S706, the subscriber profile holding device 201 searches for a terminal device that stays within the network and that satisfies the condition. When it is confirmed that there is no terminal device that satisfies the condition in the network 12 of the communications carrier "a" that has assigned the identification code "A" (step S707), the subscriber profile holding device 201 makes an instruction of reconnection to the call processor 1101 of the home network 11 (step S708).
The call processor 1101 that received the instruction of reconnection at step S708 issues a reconnection instruction to the call processor 1202 (step S709).
The call processor 1102 that received the instruction of reconnection at step S709 issues a connection instruction to the source network 13 (step S710).

Upon receipt of the connection request at step S710, a reconnection request is issued to the call processor 1101 of the home network 11 from the source network 13 (step S711).
The call processor 1101 of the home network 11 that received the reconnection request at step S711 makes an inquiry to the subscriber profile holding device 201 about the callee information (step S712).

After receiving the inquiry about the callee information at step S712, the subscriber profile holding device 201 searches for the terminal device that stays within the network and that satisfies the condition (step S713). When such a satisfied terminal device is found, the subscriber profile holding device 201 supplies the subscriber information on the corresponding terminal device to the call processor 1101 of the home network 11 (step S714).
The call processor 1101 that was supplied with the subscriber information at step S714 issues a connection request to the corresponding terminal device (step S715).

### Industrial Applicability

The present invention is effectively applicable to the achievement of a mobile communications system that allows a call connection control automatically in accordance with an identification code that is a destination of a connection request on an incoming call, when a terminal device receives the incoming call, and the state of the terminal device staying within a network, based upon a subscriber' s will, and is also applicable to a subscriber profile holding device to be applied to the above system.

## Claims

1. A mobile communications system in which a plurality of subscriber identification codes are assigned to a terminal device as subscriber identification codes representing the terminal device, the subscriber identification codes including a primary subscriber identification code assigned by a primary communications carrier in a primary contract and a supplemental subscriber identification code assigned by another communications carrier in a supplemental contract, the mobile communications system comprising:
a subscriber profile holding device installed in a network operated by the primary communications carrier and for holding subscriber information and connection admissibility condition data representing a connection admissibility condition on whether or not a connection to a subscriber is admissible in case that a connection request to the terminal device is issued with respect to the supplemental subscriber identification code; and
a call processor for performing a call connection control in response to an incoming call based upon the connection admissibility condition data held by the subscriber profile holding device.

2. A subscriber profile holding device holding prescribed data to be referred to for a call connection control by a call processor in a mobile communications system in which a plurality of subscriber identification codes are assigned to a terminal device as subscriber identification codes representing the terminal device, the subscriber identification codes including a primary subscriber identification code assigned by a primary communications carrier in a primary contract and a supplemental subscriber identification code assigned by another communications carrier in a supplemental contract, the subscriber profile holding device comprising:
a subscriber information holding section installed in a network operated by the primary communications carrier for holding subscriber information to be referred to from the call processor; and
a connection admissibility condition data holding section for holding connection admissibility condition data representing a connection admissibility condition on whether or not a connection to a subscriber is admissible in case that a connection request to the terminal device is issued with respect to the supplemental subscriber identification code.

3. The subscriber profile holding device according to claim 2, further comprising a connection admissibility determination section for determining whether or not the connection is admissible based upon data representing the connection admissibility condition held by the connection admissibility condition data holding section and data representing a connection state on the connection request externally supplied.

4. The subscriber profile holding device according to claim 2, wherein the connection admissibility condition data holding section holds data generated in response to a selective setting by a subscriber arbitrarily as data representing the connection admissibility condition.
